# EUROPÄISCHE PATENTSCHRIFT

(11) **EP 1 634 854 B1**
(45) Veröffentlichungstag und Bekanntmachung des Hinweises auf die Patenterteilung: **23.07.2008**
(21) Anmeldenummer: 05017460.6
(22) Anmeldetag: 16.08.2005
(51) Int. Cl.: C02F 3/12, C02F 3/00

(54) **Verfahren zur direkten, selektiven Wahl eines gewünschten, niedrigen Schlammindex beim Belebtschlammverfahren mittels externer Schlammselektion**
Method for direct selection of a predetermined low sludge index by means of external sludge selection within an activated sludge method
Méthode de sélection directe d'un indice de boue souhaitée dans une méthode de boues activées par selection de boue externe

(30) Priorität: 08.09.2004 DE 102004043814
(43) Veröffentlichungstag der Anmeldung: 15.03.2006
(73) Patentinhaber: Holm, Niels Christian, 32425 Minden (DE)
(72) Erfinder: Holm, Niels Christian, 32425 Minden (DE)
(74) Vertreter: Tönnies, Jan G.

(56) Entgegenhaltungen:
- US-A- 4 452 699
- US-A- 5 160 621
- US-A1- 2004 016 698

## Beschreibung

Die Erfindung betrifft ein Verfahren zur Selektion eines Schlammes mit einem vorbestimmten, niedrigen Schlammindex bei der Abwasserbehandlung in einer Belebtschlammkläranlage. Insbesondere betrifft die Erfindung ein Verfahren zur direkten externen Belebtschlammselektion im Rahmen von Belebtschlammverfahren, bei denen hinsichtlich ihres Schlammindex (ISV: Maß für die Absetzgeschwindigkeit des Belebtschlammes) mittels externer Belebtschlammselektion die Einstellung eines gewünschten Schlammindex realisiert wird.

Bei sehr vielen kommunalen, industriellen und gewerblichen Abwasserreinigungsanlagen sind in den letzten Jahrzehnten eine Unzahl von speziellen Verfahrensschritten entwickelt und realisiert worden, um die Auswirkungen auf den Schlammindex gezielt untersuchen zu können, siehe z.B. [1]. In allen diesen Fällen ist es dabei das vorrangige Ziel gewesen, Prozessbedingungen zu "finden", die zu einem stabil niedrigen Schlammindex führen. Dieses ist ökonomisch sehr vorteilhaft, da die Höhe des Schlammindex über die Höhe der betreibbaren Belebtschlammkonzentration und/oder der hydraulischen Durchsatzkapazität entscheidet und somit der entscheidende Parameter für die Anlagengröße der Belebungs- und Nachklärbecken bzw. SB Reaktoren ist.

Außerdem ist ein stabil niedriger Schlammindex ökologisch sehr vorteilhaft, da überwiegend nur mit hohen Schlammindizes große Probleme wie Schwimm- und Blähschlammbildung verknüpft sind. Diese Schlammfraktionen mit vergleichsweise hohem Schlammindex gelangen oft unkontrolliert in die Vorfluter und verursachen dort erhebliche Gewässerverunreinigungen inklusive Fischsterben. Zudem führen erhöhte Schlammabtriebe zu entsprechend erhöhten Ablaufkonzentrationen, insbesondere des Abwasserabgabepflichtigen Parameters CSB (chemischer Sauerstoff Bedarf). Daraus resultieren dann höhere Abwasserabgabekosten und ggfl. auch Bußgelder.

Der heutige Kenntnisstand hinsichtlich des Schlammindex beeinflussende allgemeine Faktoren (nach dem ATV Arbeitsblatt A 131 [2] und dem Merkblatt M 210 [3]) lässt sich wie folgt zusammenfassen:

Je nach Art der gewerblichen Einflüsse können günstige oder ungünstige Auswirkungen auf den Schlammindex auftreten. Beispielsweise wirken sich Weinbauabwässer oft ungünstig aus. Auch niedrigere Schlammalter wirken sich oft ungünstig auf den Schlammindex aus. Betriebsweisen mit stoßweiser Beschickung (nach dem "plug flow" bzw. "feast/famine" Prinzip, siehe z.B. M 210) wirken sich dagegen überwiegend positiv auf den Schlammindex aus. Grundsätzlich gilt aber, dass selbst bei Realisierung vieler oder aller positiven Faktoren auch hohe Schlammindizes resultieren können und manchmal auch niedrige Schlammindizes unter ungünstigen Bedingungen auftreten.

Auch eine Reihe von speziellen Faktoren, wie anaerobe, anoxische und aerobe Selektoren und Zugabe unterschiedlicher Fäll- und Flockungsmittel sind in ihren Auswirkungen auf den Schlammindex untersucht worden. Manchmal wurden positive und manchmal negative Auswirkungen festgestellt. Wiederum konnte in keinem Fall generell positive Auswirkungen festgestellt werden: Was bei vielen Anlagen zu einer Verringerung des Schlammindex führte, bewirkte bei anderen Anlagen nahezu nichts und wirkte sich bei einigen sogar negativ aus.

Zu den stabilsten positiven Faktoren gehört die Realisierung des feast/famine Prinzips bei SBR Anlagen, siehe z.B. [4]. Leider gibt es allerdings auch hierfür einige großtechnische Gegenbeispiele.

Seit einigen Jahren werden Prozessbedingungen, die zur Entwicklung so genannter aerober granulärer Flocken führt, intensiv untersucht [5]. Hierbei handelt es sich um einen besonderen Typ von Belebtschlamm in SBR Anlagen mit einem extrem geringen Schlammindex von 15 - 40 ml/g. Mittlerweile sind hierfür aus ökonomischer Sicht realisierbare Verfahrenstechniken entwickelt worden, die eine recht stabile Belebtschlammpopulation zumindest im Labormaßstab gewährleisten, siehe z.B. [6]. Die CSB Ablaufkonzentration aus solchen Anlagen ist allerdings unakzeptabel hoch und muss mit nachfolgenden Reinigungsschritten reduziert werden. Diese zu hohen CSB Werte treten immer bei Unterschreitung eines Schlammindex von ca. 40 ml/g auf.

Alle obigen Verfahren zielen darauf ab, Prozessbedingungen zu realisieren, die mehr oder weniger indirekt einen positiven Selektionsdruck auf schnell absetzbare Flocken ausüben. Dies gelingt deshalb oft (aber nicht immer), weil der Belebtschlamm aller Anlagen aus einem Gemisch unterschiedlich schnell absetzbarer Flocken besteht. Der gemessene Schlammindex ist daher eine Art Mittelwert über die Flockenstruktur aller Flocken eines Beckens.

Diese Rahmenbedingungen sind insofern indirekt, als dass alle bisher realisierten Formen der Überschussschlammentnahme aus SB-Reaktoren
1) entweder aus dem vollduchmischten Behälter die Entnahmen erfolgen und somit zwischen den Flockenfraktionen keinerlei Unterscheidung erfolgt oder
2) während bzw. am Ende der Sedimentationsphase die Überschussschlammentnahme im Bereich der Reaktorsohle erfolgt und somit tendenziell sogar Fraktionen mit überwiegend guten Absetzeigenschaften entnommen werden.

Bei allen bisher realisierten Formen der Überschussschlammentnahmen aus kontinuierlichen Belebungsanlagen erfolgt diese aus den Absetzbereichen der Nachklärbecken, die zur besseren Veranschaulichung im Folgenden in drei Typen unterteilt sind:
In Typ 1 Anlagen erfolgt die Überschussschlammentnahme entweder aus den zentralen Trichterspitzen runder Nachklärbecken in denen der Belebtschlamm nach Sedimentation bzw. parallel zu dieser hineingeräumt wurde (in horizontalen Nachklärbecken mit Räumschilden) oder direkt hineinsedimentierte (in vertikalen Nachklärbecken)
In Typ 2 Anlagen erfolgt die Überschussschlammentnahme aus peripheren Trichterbereichen längsdurchströmter rechteckiger Nachklärbecken in denen der Belebtschlamm nach Sedimentation bzw. parallel zu dieser mittels Bandräumern hineingeräumt wurde.
In Typ 3 Anlagen erfolgt die Überschussschlammentnahme mittels der so genannten Saugräumung mehr oder weniger über die gesamte Sohle runder Nachklärbecken: An der drehenden Räumbrücke sind vom Zentrum bis zur Peripherie mehrere Saugrohre bis kurz über der Sohle montiert; über diese Saugrohre wird der Belebtschlamm nach oben gefördert und gesammelt dem Becken entnommen.

Bei dem entnommenen Belebtschlamm handelt es sich in allen Fällen um den so genannten Rücklaufschlamm, der in den Zulauf zu den Belebungsbecken zurückgefördert wird. Aus diesem Rücklaufschlammstrom wird dann bedarfsgerecht der Überschussschlamm entnommen.

Aus allen oben aufgeführten Entnahmearten folgt unmittelbar, dass es sich beim Rücklaufschlamm und somit auch beim Überschussschlamm um einen Belebtschlamm handelt, der exakt die gleichen Eigenschaften hat wie der Belebtschlamm im Belebungsbecken, d.h. insbesondere den gleichen Schlammindex.

Ein Verfahren aus dem Stand der Technik ist zum Beispiel US 4 452 699.

Aufgabe dieser Erfindung ist es, ein Verfahren bereit zu stellen, bei dem die im Belebtschlamm befindlichen Flocken mit guten Absetzeigenschaften direkt positiv selektioniert werden, indem in einem externen Becken diese Diskriminierung stattfindet.

Die Aufgabe wird gelöst durch ein Verfahren zur Abwasserbehandlung in einer kontinuierlichen Belebtschlammkläranlage mit wenigstens einem Becken einer biologischen Klärstufe oder einer SBR-Anlage mit wenigstens einem SB-Reaktor, mit den Schritten a) Einleiten eines aus der kontinuierlichen Belebtschlammkläranlage oder der SBR-Anlage geförderten Belebtschlamms in einen separaten Behälter, b) Absetzenlassen des Belebtschlamms, c) Entnehmen der sich absetzenden und/oder abgesetzten, oberen Schlammfraktion mit hohem Schlammindex als Überschussschlamm, d) Einleiten der sich absetzenden und/oder abgesetzten, unteren Schlammfraktion mit geringerem Schlammindex in ein Becken der Belebtschlammkläranlage oder ein Becken der SBR-Anlage, e) Bestimmen des Schlammindex in dem wenigstens einen Becken der biologischen Klärstufe der Belebtschlammkläranlage oder dem wenigstens einen SB-Reaktor der SBR-Anlage, f) Wiederholen der Schritte b) bis e) bis ein vorbestimmter, niedriger Schlammindex in dem wenigstens einen Becken der biologischen Klärstufe der Belebtschlammkläranlage oder dem wenigstens einen SB-Reaktor der SBR-Anlage erreicht ist.

Das Prinzip des Verfahrens besteht darin, Belebtschlamm aus einem Becken einer Belebtschlammkläranlage in einen separaten Behälter einzuleiten und dort in Schlammfraktionen mit hohem und mit niedrigem Schlammindex zu unterteilen. Während die Schlammfraktion mit hohem Schlammindex als Überschusschlamm entnommen wird, wird die Schlammfraktion mit niedrigem Schlammindex wieder an einer geeigneten Stelle, bevorzugt ein Belebungsbecken, in die Belebtschlammkläranlage zurückgeführt. Im Belebungsbecken selbst wird der Schlammindex bestimmt und die Schlammfraktion mit niedrigem Schlammindex solange aus dem separaten Behälter der Belebtschlammkläranlage zugeführt, bis ein vorbestimmter Schlammindex-Wert im Belebungsbecken gemessen wird.

### Diese erfindungsgemäße Lösung wird wie folgt realisiert:

Ein Teil des Belebtschlammes, die in einer bevorzugten Ausgestaltung der Erfindung vorzugsweise das 0,3 bis 5,0 fache der Überschussschlammmenge des zu entfernenden Überschussschlamms entspricht, wird in einen separaten Behälter (nachfolgend Selektionsreaktor genannt) gefördert. Hierbei handelt es sich vorzugsweise um einen zylindrischen Behälter, bei dem das Verhältnis Höhe/Durchmesser zwischen 0,1 und 3,0 liegt. Dieser Behälter ist bevorzugt mit einer Umwälzeinrichtung ausgestattet, die eine Homogenisierung des Belebtschlamm-Wassergemisches gewährleistet.

Im Rahmen einer technisch einfachen Ausgestaltung der Erfindung Typ 1 wird nach Befüllung dieses Selektionsreaktors die Umwälzeinrichtung ausgestellt zur Einleitung einer Absetzphase des Belebtschlammes. Alleine im Verlaufe dieser Schlammabsetzung erfolgt eine gewisse Belebtschlammselektion: Die Fraktion mit den schnelleren Absetzeigenschaften wird sich überproportional in den unteren Schlammschichten anreichern. Nach bzw. während der Absetzphase (10 min bis 150 min nach Beginn der Absetzphase) wird der obere Teil der Schlammschicht entnommen und als Überschussschlamm der weitergehenden Schlammbehandlung zugeführt während die unteren Schlammschichten, mit dem gewünschten geringerem Schlammindex, in die Belebtschlammbiologie zurückgefördert wird.

Im Rahmen einer technisch etwas aufwendigeren Ausführungsform Typ 2 wird die Behältersohle des Selektionsreaktors vorzugsweise flächig ausgestattet mit perforierten Zulaufrohren, mittels derer von unter über die gesamte Sohle Trinkwasser, Brauchwasser, gereinigtes Abwasser oder Rohabwasser oder ein ähnliches Medium zugeführt wird. Diese Medium wird dann durch das Schlammbett hindurchgeführt mit einer vertikalen Geschwindigkeit, die etwas unterhalb der Absetzgeschwindigkeit des Belebtschlammes liegt, so dass während der Phase der Zuführung dieses Mediums sich quasi ein Schlamm-Schwebebett ausbildet mit einem oberen Klarwasserüberstand. Dieser Überstand wird mittels eines Überlaufes im Selektionsreaktor kontinuierlich dekantiert oder nach/während der Absetzphase entfernt.

Während dieser Zuführphase erfolgt eine erhebliche Belebtschlammselektion: Die Fraktionen mit den schnelleren Absetzeigenschaften werden sich überproportional in den unteren Schlammschichten anreichern. Nach bzw. während der Absetzphase (10 min bis 150 min nach Beginn der Absetzphase) analog dem vorgehen nach Typ 1 wird der obere Teil der Schlammschicht entnommen und als Überschussschlamm der weitergehenden Schlammbehandlung zugeführt während die unteren Schlammschichten, mit dem gewünschten geringeren Schlammindex, in die Belebtschlammbiologie zurückgefördert werden.

Die Realisierung von Typ 2 mit Rohabwasser oder analogen Medien wie z.B. Filtrat- oder Trübabwasser aus der Faulung, kann genutzt werden zu einer sehr spezifischen Phosphor-Frachtverlagerung:
Während nach dem Phostrip Verfahren mittels Schlammrezyklierung und einer rein statischen Schlamm/Wasser Trennung der herrausgelöste Phosphor sich über dem Schlammbett im Wasserüberstand befindet und aus dieser Fraktion selektiv entfernt wird [7], ist im Rahmen dieser Verfahrensvariante vorgesehen, nur so viel Medium durch das Schlammbett zu fördern, bis der rückgelöste Phosphor sich in den oberen Schlammschichten befindet:
Durch Entnahme dieser oberen Schlammschichten im Rahmen der oben erläuterten ÜS-Select Strategie wird zugleich ein überproportional hohen Anteil an Phosphor dem System entnommen. Diese oberen Schichten enthalten zusätzlich zu "ihrem" Phosphor noch einen Großteil des Phosphors aus den unteren Schlammschichten, die in die Belebtschlammbiologie zurückgefördert werden. Diese Belebtschlammfraktion hat daher ein überproportional hohes Phosphor Aufnahmepotential und damit wird die biologische Phosphorelimination der Belebtschlammanlagen stark verbessert.

Alle oben aufgeführten Selektionsstrategien werden den Schlammindex mehr oder weniger stark reduzieren. Eine Reduktion unterhalb von ca. ISV = 50 ml/g kann jedoch kontraproduktiv sein, da dann unter Umständen die CSB Konzentration im Ablauf ansteigt.

Um diese Entwicklung nach Erreichen des gewünschten Schlammindex zu beenden, muss gewährleistet sein, dass keine weitere Selektion in Richtung eines noch niedrigeren Schlammindex erfolgt. Daher sind die oben aufgeführten Selektionsstrategien so auszuführen, dass auch bei Bedarf der mittlere Schlammindex entnommen werden kann oder sogar die Belebtschlammfraktion mit dem geringen Schlammindex.

Daher muss entweder 1) nach Beginn der Sedimentationsphase von der Sohle des Selektionsreaktors der Belebtschlamm entnommen werden können und/oder 2) der Überschussschlamm wird eine Zeitlang mittels der konventionellen Überschussschlammentnahme entnommen.

Mit den oben aufgeführten Selektionsstrategien inklusive der Möglichkeit auch gegenzusteuern kann jede Belebtschlamm Anlage sehr weitgehend genau auf jeden beliebig gewünschten Schlammindex eingestellt werden. Selbstverständlich wird diese Einstellung schneller erfolgen, wenn die positiven indirekten Rahmenbedingungen auch vorliegen, aber ihre Bedeutung ist wesentlich geringer als bei Anlagen ohne direkter Selektion von Schlammflocken mit im Mittel höherer Absetzgeschwindigkeit.

Die Folgen für die Planung neuer Anlagen sind eindeutig: Der Schlammindex muss nicht mehr anhand von sehr groben statistischen Erfahrungswerten "bemessen", d.h. abgeschätzt werden, mit den großen Sicherheitszuschlägen, die dann erforderlich sind. Bei Implementierung dieser Erfindung kann der Schlammindex mit großen Sicherheiten nahezu frei "gewählt" werden, d.h. es wird dann ein relativ geringer Schlammindex gewählt mit der Folge von enormen Volumen- und somit Kosteneinsparungen.

Auf vorhandenen Anlagen kann die Erfindung sehr einfach und kostengünstig nachgerüstet werden. Sehr viele ansonsten erforderliche Nachrüstungsmaßnahmen, insbesondere Volumenerweiterungen, werden dann nicht mehr realisiert werden müssen.

Auch die Auswirkungen auf die Schlammbehandlung sind enorm. Mit einem Schlammindex von ca. 45 ml/g ist nach vergleichsweise kurzer statischer Eindickung ein End-TS-Gehalt von 5 - 6 % erreichbar. Damit entfällt die Erfordernis einer maschinellen Eindickung auf diesen TS-Gehalt.

Mit einem Schlammindex von beispielsweise ISV = 50 ml/g können nahezu alle vorhanden Belebtschlammanlagen mit viel höheren Belebtschlammkonzentrationen betrieben werden als bisher.

### Literatur

[1] Irvine, R.L., Ketchum Jr.,L.H.: Sequencing Batch Reactor for Biological Wastewater Treatment. CRC Crit. Rev. Environ. Control, 1988, 18, 255.
[2] ATV - A 131: Bemessung von einstufigen Belebungsanlagen ab 5.000 Einwohnerwerten. GFA, St.Augustin, Mai 2000.
[3] ATV - M 210: Belebungsanlagen mit Aufstaubetrieb. Gesellschaft zur Förderung der Abwassertechnik e.V. (GFA), Hennef, 1997.
[4] McSwain, B.S., Irvine, R.L., Wilderer, P.A.: The effect of intermittent feeding on aerobic granular structure. Water Science and Technology, Vol. 49, No. 11-12, 2004, 19ff.
[5] de Bruin, L.M.M., de Kreuk, M.K., van der Roest, H.F.R., Uijterlinde, C., van Loosdrecht, M.C.M.: Aerobic granular sludge technology; alternative for activated sludge? Water Science and Technology, Vol. 49, No. 11-12, 2004 1ff.
[6] Etterer, T., Wilderer, P.A.: Generation and properties of aerobic granular sludge Water Science and Technology, Vol. 43, No. 3, 2001, 19ff.
[7] Verbundforschungsvorhaben: Verfahrensentwicklung zur simultanen biologischen Stickstoff- und Phosphor-Elimination gefördert von der Deutschen Bundesstiftung Umwelt (Az0277), Endbericht 1996.

## Patentansprüche

1. Verfahren zur Abwasserbehandlung in einer kontinuierlichen Belebtschlammkläranlage mit wenigstens einem Becken einer biologischen Klärstufe oder einer SBR-Anlage mit wenigstens einem SB-Reaktor,
**gekennzeichnet durch**
a) Einleiten eines aus der kontinuierlichen Belebtschlammkläranlage oder der SBR-Anlage geförderten Belebtschlamms in einen separaten Behälter,
b) Absetzenlassen des Belebtschlamms,
c) Entnehmen der sich absetzenden und/oder abgesetzten, oberen Schlammfraktion mit hohem Schlammindex als Überschussschlamm,
d) Einleiten der sich absetzenden und/oder abgesetzten, unteren Schlammfraktion mit geringerem Schlammindex in ein Becken der Belebtschlammkläranlage oder ein Becken der SBR-Anlage,
e) Bestimmen des Schlammindex in dem wenigstens einen Becken der biologischen Klärstufe der Belebtschlammkläranlage oder dem wenigstens einen SB-Reaktor der SBR-Anlage,
f) Wiederholen der Schritte b) bis e) bis ein vorbestimmter, niedriger Schlammindex in dem wenigstens einen Becken der biologischen Klärstufe der Belebtschlammkläranlage oder dem wenigstens einen SB-Reaktor der SBR-Anlage erreicht ist.

2. Verfahren nach Anspruch 1, **dadurch gekennzeichnet, dass** der in den separaten Behälter geförderte Belebtschlamm der 0,3- bis 5-fachen Überschussschlammmenge entspricht.

3. Verfahren nach einem der vorhergehenden Ansprüche, **dadurch gekennzeichnet, dass** der Belebtschlamm aus wenigstens einem an der Behältersohle angeordneten, perforierten Rohr mit Wasser vertikal durchspült wird.

4. Verfahren nach Anspruch 3, **dadurch gekennzeichnet, dass** das Wasser den in das separate Becken geförderten Belebtschlamm unter Ausbildung eines Schlamm-Schwebebetts durchströmt, wobei die Strömungsgeschwindigkeit des Wassers geringer als die Absetzgeschwindigkeit des Belebtschlamms ist.

5. Verfahren nach Anspruch 3 oder 4, **dadurch gekennzeichnet, dass** das Wasser ausgewählt ist aus der Gruppe bestehend aus Trinkwasser, Brauchwasser, gereinigtem Abwasser, Rohabwasser, internem Trüb- und/oder Filtratwasser.

6. Verfahren nach einem der vorhergehenden Ansprüche, **dadurch gekennzeichnet, dass** der in das separate Becken geförderte Belebtschlamm vor dem Absetzenlassen oder nach nach dem Erreichen des vorbestimmten, niedrigen Schlammindex mit einer im Behälter angeordneten Umwälzeinrichtung homogenisiert wird.

7. Verfahren nach einem der vorhergehenden Ansprüche, **dadurch gekennzeichnet, dass** das Absetzenlassen für einen Zeitraum von 10 bis 150 Minuten erfolgt.

8. Verfahren nach einem der vorhergehenden Ansprüche, **dadurch gekennzeichnet, dass** die Entnahme der oberen Schlammfraktion mittels einer Pumpe oder mittels eines von wenigstens einem E-Schieber-geregelten Abgangs erfolgt.

9. Verfahren nach Anspruch 8, **dadurch gekennzeichnet, dass** die Pumpe zur Entnahme der oberen Schlammfraktion höhenverstellbar ist.

10. Verfahren nach einem der vorhergehenden Ansprüche, **dadurch gekennzeichnet, dass** die obere Schlammfraktion in einer Höhe zwischen 30 und 70 % des jeweiligen Abwasserfüllstandes entnommen wird.

11. Verfahren nach einem der vorhergehenden Ansprüche, **dadurch gekennzeichnet, dass** die obere Schlammfraktion auf einer Höhe zwischen 2,0 und 0,5 m unterhalb des jeweiligen minimalen Füllstandes des Behälters entnommen wird.

12. Verfahren nach einem der vorhergehenden Ansprüche, dass die obere Schlammfraktion mit hohem Schlammindex bei Erreichen einer definierten Schlammspiegelhöhe oberhalb der Entnahmestelle entnommen wird.

13. Verfahren nach einem der vorhergehenden Ansprüche, **dadurch gekennzeichnet, dass** bei Unterschreiten eines vorbestimmten, niedrigen Schlammindex, aus der Behältersohle Schlamm mit einem niedrigen Schlammindex entnommen wird, damit der Schlammindex des verbleibenden Schlamms im Mittel auf den vorbestimmten Schlammindex ansteigt.

## Claims

1. Wastewater treatment process in a continuous activated sludge treatment plant with a minimum of one tank for a biological settling stage or a SBR plant with a minimum of one SB reactor,
**characterised in that**
a) a separate tank is filled with activated sludge delivered from the continuous activated sludge treatment plant or SBR plant,
b) the activated sludge is allowed to settle,
c) the settling and/or settled upper fraction of the sludge with a high sludge index is removed as surplus sludge,
d) a tank of the activated sludge treatment plant or a tank of the SBR plant is filled with the settling and/or settled lower fraction of the sludge with a low sludge index,
e) the sludge index is determined in the minimum of one biological settling tank of the activated sludge treatment plant or the minimum of one SB reactor of the SBR plant,
f) operations b) to e) are repeated until a specified low sludge index is achieved in the minimum of one biological settling tank of the activated sludge treatment plant or the minimum of one SB reactor of the SBR plant.

2. Process according to Claim 1, **characterised in that** the activated sludge delivered to the separate tank corresponds to between 0.3 and 5 times the surplus sludge volume.

3. Process according to one of the above Claims, **characterised in that** the activated sludge is rinsed vertically with water from a minimum of one perforated pipe installed at the bottom of the tank.

4. Process according to Claim 3, **characterised in that** the water flows through the activated sludge delivered to the separate tank, forming a fluidised sludge bed, whereby the water flows at a speed less than the settling speed of the activated sludge.

5. Process according to Claim 3 or 4, **characterised in that** the chosen water comes from the group comprising drinking water, domestic/industrial water, purified wastewater, crude wastewater, internal cloudy and/or filtrate water.

6. Process according to one of the above Claims, **characterised in that** the activated sludge delivered to the separate tank is homogenised by a circulating system installed in the tank before the sludge is allowed to settle or after reaching a specified low sludge index.

7. Process according to one of the above Claims, **characterised in that** the time allowed for settling is between 10 and 150 minutes.

8. Process according to one of the above Claims, **characterised in that** the upper sludge fraction is removed by a pump or by a minimum of one outlet controlled by an electrovalve.

9. Process according to Claim 8, **characterised in that** the pump used to remove the upper sludge fraction is adjustable in height.

10. Process according to one of the above Claims, **characterised in that** the upper sludge fraction is removed at a height between 30% and 70% of the respective wastewater level.

11. Process according to one of the above Claims, **characterised in that** the upper sludge fraction is removed at a height between 2.0m and 0.5m below the respective minimum filled level of the Sequencing Batch Reactor.

12. Process according to one of the above Claims, **characterised in that** the upper sludge fraction with a high sludge index is removed on reaching a specific sludge level above the removal point.

13. Process according to one of the above Claims, **characterised in that** when the value falls below a specified low sludge index, sludge with a low sludge index is removed from the bottom of the tank, so that the sludge index of the remaining sludge in the centre increases to the specified sludge index.

## Revendications

1. Procédé de traitement d'eaux usées dans une station d'épuration en continu à boue activée pourvue d'au moins un bassin d'épuration biologique, ou dans une station de traitement biologique séquentiel pourvue d'au moins un réacteur biologique séquentiel,
**caractérisé par**
a) introduire dans un récipient séparé une boue activée véhiculée depuis la station d'épuration en continu à boue activée ou depuis la station de traitement biologique séquentiel,
b) laisser se déposer la boue activée,
c) prélever en tant que boue excédentaire la fraction de boue supérieure ayant un indice de boue élevé qui se dépose et/ou qui s'est déposée,
d) introduire dans un bassin de la station d'épuration à boue activée ou dans un bassin de la station de traitement biologique séquentiel la fraction de boue inférieure ayant un indice de boue plus bas qui se dépose et/ou qui s'est déposée,
e) déterminer l'indice de boue dans le bassin d'épuration biologique au moins unique de la station d'épuration à boue activée ou dans le réacteur biologique séquentiel au moins unique de la station de traitement biologique séquentiel,
f) répéter les étapes b) à e) jusqu'à ce qu'un bas indice de boue prédéfini soit atteint dans le bassin d'épuration biologique au moins unique de la station d'épuration à boue activée ou dans le réacteur biologique séquentiel au moins unique de la station de traitement biologique séquentiel.

2. Procédé selon la revendication 1, **caractérisé en ce que** la boue activée véhiculée dans le récipient séparé correspond à 0,3 à 5 fois la quantité de boue excédentaire.

3. Procédé selon l'une des revendications précédentes, **caractérisé en ce que** la boue activée est rincée verticalement à grande eau à partir d'au moins un tube perforé disposé sur la base du récipient.

4. Procédé selon la revendication 3, **caractérisé en ce que** l'eau traverse la boue activée véhiculée dans le bassin séparé en formant un lit flottant de boue, la vitesse d'écoulement de l'eau étant inférieure à la vitesse de déposition de la boue activée.

5. Procédé selon la revendication 3 ou 4, **caractérisé en ce que** l'eau est sélectionnée dans un groupe comprenant de l'eau potable, de l'eau non potable, des eaux usées épurées, des eaux usées brutes, de l'eau trouble interne et/ou de l'eau de filtration interne.

6. Procédé selon l'une des revendications précédentes, **caractérisé en ce que** la boue activée véhiculée dans le bassin séparé est, avant de la laisser se déposer ou après, à l'atteinte du bas indice de boue prédéfini, homogénéisée au moyen d'un équipement de circulation disposé dans le récipient.

7. Procédé selon l'une des revendications précédentes, **caractérisé en ce qu'**on laisse la boue se déposer pendant une durée de 10 à 150 minutes.

8. Procédé selon l'une des revendications précédentes, **caractérisé en ce que** le prélèvement de la fraction de boue supérieure s'effectue au moyen d'une pompe ou au moyen d'une sortie régulée par au moins un tiroir à commande électrique.

9. Procédé selon la revendication 8, **caractérisé en ce que** la pompe destinée à prélever la fraction de boue supérieure est réglable en hauteur.

10. Procédé selon l'une des revendications précédentes, **caractérisé en ce que** la fraction de boue supérieure est prélevée à une hauteur comprise entre 30 et 70% du niveau respectif d'eaux usées.

11. Procédé selon l'une des revendications précédentes, **caractérisé en ce que** la fraction de boue supérieure est prélevée à une hauteur comprise entre 2,0 et 0,5 m en dessous du niveau de remplissage minimal respectif du récipient.

12. Procédé selon l'une des revendications précédentes, **caractérisé en ce que** la fraction de boue supérieure ayant un indice de boue élevé est prélevée à l'atteinte d'une hauteur de boue définie au-dessus du point de prélèvement.

13. Procédé selon l'une des revendications précédentes, **caractérisé en ce qu'**en cas de sous-dépassement d'un bas indice de boue prédéfini, on prélève de la base du récipient de la boue ayant un bas indice de boue, afin que l'indice de boue de la boue restante s'élève en moyenne à l'indice de boue prédéfini.
